# EUROPEAN PATENT APPLICATION

(11) **EP 3 808 180 A1**
(43) Date of publication of application: **21.04.2021**
(21) Application number: 19808244.8
(22) Date of filing: 10.01.2019
(51) Int. Cl.: A01N 59/16, A01N 25/12, A01N 59/06, A01P 7/04, C09D 5/14, C09D 7/61, C09D 201/00

(54) **METHOD FOR CONTROLLING HARMFUL INSECTS**

(30) Priority: 25.05.2018 JP 2018100516
(71) Applicant: Dr. C Medical Medicine Co., Ltd., Tokyo 163-1302 (JP)
(72) Inventor: OKAZAKI Narumi, Tokyo 163-1302 (JP)
(74) Representative: Potter Clarkson
(86) International application number: PCT/JP2019/000510
(87) International publication number: WO 2019/225051

(57) **Abstract**

[Abstract]

A method for controlling a harmful insect is provided, the insect has little influence on the environment and is easily manipulated. As a result of in-depth studies, the present inventors found that a composite particle including a titanium oxide particle, a metal particle, and a calcium phosphate particle is contacted with a harmful insect or an egg thereof; or the composite particle is placed in the vicinity of the harmful insect or the egg, which makes it possible to effectively kill the harmful insect and control the harmful insect.

## Description

### Technical Field

The present invention relates to a method for controlling a harmful insect. More specifically, the present invention relates to a method for controlling a harmful insect using a composite particle including a titanium oxide particle, a metal particle, and a calcium phosphate particle.

### Background Art

In tropical areas to temperate areas in the world, it is estimated that about 720 million people still suffer from mosquito-borne infections per year, and 2 million to 4 million people of them die.

Vaccines and antiviral drugs which are effective in many infections are under development. In the present condition, the development of methods for controlling vector mosquitoes is only an infection control method, and is expected. However, at present, a method effective in mosquitoes is not found for 100 years or more after malaria is found to be borne by the mosquitoes.

As a mosquito combating method, for example, a method of Patent Literature 1 has been known. In the method, a juvenile hormone-like active compound or the like as an insect growth regulator is exposed to adults, and the adults lay eggs adjacent to water, so that larvae of the mosquitoes are combated. However, there are concerns about the influence of the juvenile hormone-like active compound used in the method to the ecosystem.

Patent Literature 2 has been known as a method for preventing the occurrence itself of mosquitoes. The method relates to an apparatus for preventing the occurrence of the mosquitoes. The apparatus includes a water storing part including an upper surface opened to the atmosphere and a drain port provided in a bottom part thereof, a drain valve for opening and closing the drain port, and means for driving and controlling the drain valve. In a day when water is stored in the water storing part, the water of the water storing part is drained by driving the drain valve after a predetermined length of time passes. However, the method requires a driving device, and the device has a complicated constitution, which is not realistic in a wide area where the mosquitoes occur.

In addition, a method for spraying an insecticide or applying an insect repellent such as a repellent to the skin is also general, and temporary. Continuous use of an organic compound which is an active ingredient in many cases is far from being desirable from health and the influence of the organic compound on the environment.

Non-Patent Literature 1 describes "earthplus" (TM) manufactured and sold by Shinshu Ceramics Co., Ltd. (Nagano, Japan) as having microbicidal action on Staphylococcus aureus, Escherichia coli, and Pseudomonas aeruginosa. The earthplus is a powder of a composite material into which titanium oxide, silver, and hydroxyapatite are composited, and contains composite particles including one or more titanium oxide particles, one or more silver particles, and one or more hydroxyapatite particles. In the composite particle, one or more titanium oxide particles, one or more silver particles, and one or more hydroxyapatite particles are arranged three-dimensionally and randomly, and at least one silver particle is fixedly attached to at least one titanium oxide particle. The earthplus exerts microbicidal action based on the photocatalytic action of titanium oxide particles, the microbicidal action of silver particles, and the adsorbent action of hydroxyapatite particles. That is, the earthplus adsorbs microorganisms by the adsorbent action of hydroxyapatite particles and exerts microbicidal action on the microorganisms by the photocatalytic action of titanium oxide particles and the microbicidal action of silver particles.

However, no attention is paid to action on harmful insects such as mosquitoes, and the action is not disclosed or suggested.

### Citation List

### Patent Literatures

Patent Literature 1: Japanese Patent Laid-Open No. 5-320001
Patent Literature 2: Japanese Patent Laid-Open No. 2003-144031

### Non-Patent Literature

Non Patent literature 1 : Eriko Kasuga et al., Bactericidal activities of woven cotton and nonwoven polypropylene fabrics coated with hydroxyapatite-binding silver/titanium dioxide ceramic noncomposite "Earthplus", International Journal of Nanomedicine, 2011:6, pp.1937-1943

### Summary of Invention

### Technical Problem

It is an object of the present invention to provide a method for controlling a harmful insect, which has little influence on the environment and is easily manipulated.

### Solution to Problem

As a result of in-depth studies, the present inventors found that a composite particle including a titanium oxide particle, a metal particle, and a calcium phosphate particle is contacted with a harmful insect or an egg thereof or the composite particle is placed in the vicinity of the harmful insect or the egg, which makes it possible to effectively kill the harmful insect and control the harmful insect, thereby completing the present invention. That is, the present invention includes the following constitution.
(1) A harmful insect control method including:
   contacting a composite particle including a titanium oxide particle, a metal particle, and a calcium phosphate particle with a harmful insect or an egg thereof; or
   placing the composite particle in the vicinity of the harmful insect or the egg.
(2) The method according to (1), wherein the harmful insect is a harmful insect bearing a zoonosis.
(3) The method according to (2), wherein the harmful insect bearing a zoonosis is a mosquito.
(4) The method according to any one of (1) to (3), wherein the contacting or placing step is performed in water.
(5) A harmful insect control member: having a composite particle including a titanium oxide particle, a metal particle, and a calcium phosphate particle on the member surface.
(6) The member according to (4), wherein the member is any one selected from a nonwoven fabric, a vessel, a manhole, a street inlet, and a concrete product.
(7) The member according to (5) or (6), wherein the member is used in combination with water or in water.
(8) A harmful insect control coating material including: a composite particle including a titanium oxide particle, a metal particle, and a calcium phosphate particle.
(9) A harmful insect control agent including: a composite particle including a titanium oxide particle, a metal particle, and a calcium phosphate particle.

### Advantageous Effects of Invention

The present invention can control harmful insects. In particular, the hatch of eggs of mosquitoes can be controlled, and wrigglers, which are larvae of the mosquitoes, can be killed. Therefore, the spread of a mosquito-borne infection can be effectively prevented.

### Brief Description of Drawings

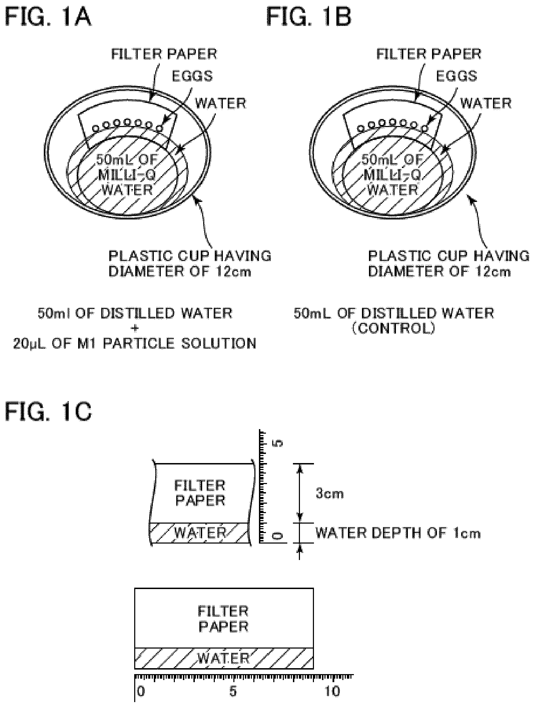

[FIG. 1A to FIG.1C] FIG. 1A to FIG.1C show a photograph and an illustration diagram which show an egg laying vessel of mosquitoes of Test Example 1. FIG. 1A shows an egg laying vessel of a test group, FIG. 1B shows an egg laying vessel of a control group, and FIG. 1C shows height and length of filter paper.

### Description of Embodiments

### (Living Subjects)

A method for controlling the hatch of eggs of mosquitoes using a composite particle has little influence on the environment and is easily manipulated. The present method can kill harmful insects or control the hatch of eggs of harmful insects including health insects and mites to control the harmful insects. Examples of subjects to be controlled include harmful insects including health insects bearing a zoonosis, and specific examples thereof include mosquitoes, moths, water fleas, mites, and eggs and larvae thereof.

Examples of the zoonosis include: bacterial zoonoses such as anthrax, plague, tuberculosis, pseudotuberculosis, pasteurellosis, salmonellosis, listeriosis, campylobacteriosis, leptospirosis, lyme disease, porcine erysipelas, bacillary dysentery, yersinia-enterocolitica infection, tularemia, rat-bite fever, and brucellosis; viral zoonoses such as influenza, SARS, rabies, West Nile fever, ebola hemorrhagic fever, marburg fever, B viral infection, Newcastle disease, Japanese encephalitis, tick encephalitis, hemorrhagic fever with renal syndrome, hantavirus pulmonary syndrome, and monkeypox; rickettsia-coxiella-bartonella zoonoses such as Q fever, scrub typhus, and feline scratch disease; chlamydia zoonoses such as psittacosis; protozoan zoonoses such as sleeping sickness, chagas disease, leishmaniasis, and cryptosporidium infection; parasitic zoonoses such as echinococcosis, schistosomiasis japonica, paragonimiasis, trichinosis, clonorchiasis, fascioliasis, and anisakiasis; fungal zoonoses such as cryptococcosis, candidiasis, aspergillosis, and cutaneous mycosis; and prion diseases such as variant Creutzfeldt-Jakob disease.

### (Composite Particle)

The composite particle used in the present invention includes one or more titanium oxide particles, one or more metal particles, and one or more calcium phosphate particles.

The number of titanium oxide particles per composite particle may be one or may be two or more. The number of titanium oxide particles per composite particle is usually two or more.

Examples of forms of the titanium oxide particle included in the composite particle include, but are not particularly limited to, globular, granular, acicular, flaky, and amorphous forms. The composite particle may include two or more titanium oxide particles having different forms.

The particle size of the titanium oxide particle included in the composite particle is not particularly limited as long as it is smaller than the particle size of the composite particle, and can be appropriately adjusted depending on the particle size of the composite particle. The titanium oxide particle included in the composite particle is, for example, a nanoparticle or a submicron particle.

Examples of crystal structures of the titanium oxide constituting the titanium oxide particle include an anatase type, a rutile type, and a brookite type, and among these, an anatase type is preferable.

The number of metal particles per composite particle may be one or may be two or more. The number of metal particles per composite particle is usually two or more.

Examples of forms of the metal particle included in the composite particle include, but are not particularly limited to, globular, granular, acicular, flaky, and amorphous forms. The composite particle may include two or more metal particles having different forms.

The particle size of the metal particle included in the composite particle is not particularly limited as long as it is smaller than the particle size of the composite particle, and can be appropriately adjusted depending on the particle size of the composite particle. The metal particle included in the composite particle is, for example, a nanoparticle or a submicron particle.

The metal particle included in the composite particle is, for example, selected from the group consisting of a silver particle, a gold particle, a platinum particle, and a copper particle. The metal particle included in the composite particle is preferably a silver particle. The composite particle may include two or more metal particles of different species.

The number of calcium phosphate particles per composite particle may be one or may be two or more. The number of calcium phosphate particles per composite particle is usually two or more.

Examples of forms of the calcium phosphate particle included in the composite particle include, but are not particularly limited to, globular, granular, acicular, flaky, and amorphous forms. The composite particle may include two or more calcium phosphate particles having different forms.

The particle size of the calcium phosphate particle included in the composite particle is not particularly limited as long as it is smaller than the particle size of the composite particle, and can be appropriately adjusted depending on the particle size of the composite particle. The calcium phosphate particle included in the composite particle is, for example, a nanoparticle or a submicron particle.

Examples of calcium phosphates constituting the calcium phosphate particle include apatite, tricalcium phosphate, and octacalcium phosphate, and among these, apatite is preferable. Examples of apatites include hydroxyapatite, apatite fluoride, and carbonate apatite, and among these, hydroxyapatite (Ca₁₀(PO₄)₆(OH)₂) is preferable.

The content of titanium oxide particles, metal particles, and calcium phosphate particles per composite particle is not particularly limited, and the lower limit value of the titanium oxide particle content is usually 10 parts by mass, preferably 20 parts by mass, more preferably 25 parts by mass, and still more preferably 30 parts by mass, relative to 1 part by mass of metal particles, and the upper limit value of the titanium oxide particle content is usually 300 parts by mass, preferably 250 parts by mass, more preferably 200 parts by mass, and still more preferably 180 parts by mass, relative to 1 part by mass of metal particles. The lower limit value of the calcium phosphate particle content is usually 1 part by mass, preferably 2 parts by mass, and more preferably 3 parts by mass, relative to 1 part by mass of metal particles, and the upper limit value of the calcium phosphate particle content is usually 100 parts by mass, preferably 80 parts by mass, more preferably 60 parts by mass, and still more preferably 50 parts by mass.

The particle size of the composite particle as measured by dynamic light scattering is preferably 100 to 600 nm, more preferably 200 to 500 nm, and still more preferably 250 to 350 nm. Particle size measurement by dynamic light scattering is made by a commercially available dynamic light scattering type particle size distribution measuring device, preferably a dynamic light scattering type nano tracking particle size distribution measuring device, "UPA-EX150" (manufactured by Nikkiso Co., Ltd.).

In the composite particle, one or more titanium oxide particles, one or more metal particles, and one or more calcium phosphate particles are preferably arranged three-dimensionally and randomly.

In one embodiment of the three-dimensional and random arrangement, at least one metal particle is fixedly attached to at least one titanium oxide particle.

In one embodiment of the three-dimensional and random arrangement, one or more particles (one or more particles selected from a titanium oxide particle, a metal particle, and a calcium phosphate particle) are present around another particle (one particle selected from a titanium oxide particle, a metal particle, and a calcium phosphate particle). In this embodiment, one or more particles of the same species may be adjacent to a particle, and one or more particles of different species may be adjacent to a particle. The adjacent particles are preferably bonded and fixedly attached to one another. Examples of combinations of adjacent particles include a combination between titanium oxide particles, a combination between metal particles, a combination between calcium phosphate particles, a combination between a titanium oxide particle and a metal particle, a combination between a titanium oxide particle and a calcium phosphate particle, and a combination between a metal particle and a calcium phosphate particle.

In one embodiment of the three-dimensional and random arrangement, a part of at least one particle selected from a titanium oxide particle, a metal particle, and a calcium phosphate particle is exposed at the surface of the composite particle.

In one embodiment of the three-dimensional and random arrangement, a part of at least one titanium oxide particle, a part of at least one metal particle, and a part of at least one calcium phosphate particle are exposed at the surface of the composite particle.

In one embodiment of the three-dimensional and random arrangement, at least one particle selected from a titanium oxide particle, a metal particle, and a calcium phosphate particle is present within the composite particle without being exposed at the surface of the composite particle.

In one embodiment of the three-dimensional and random arrangement, at least one particle selected from a titanium oxide particle, a metal particle, and a calcium phosphate particle has a membranous form and is present at at least part of the surface of the composite particle.

In one embodiment of the three-dimensional and random arrangement, two or more particles selected from a titanium oxide particle, a metal particle, and a calcium phosphate particle are formed in one piece or in a row, having a membranous form, and are present at at least part of the surface of the composite particle.

Whether a particle has a particulate form, has a membranous form, or forms a membranous form in one piece or in a row together with one or more of other particles may be influenced by the blending ratios of particles in the manufacture of the composite particles, and the like. Depending on the blending ratio, a particle may no longer maintain a particulate form but may take a membranous form present at at least a part of the surface of the composite particle. For example, when particles are composited by a mechanical approach such as bead mill and ball mill, a particle (for example, silver particle) composed of a material having a lower hardness than other particles may take such a membranous form.

Two or more of the aforementioned embodiments about the three-dimensional and random arrangement may be combined.

As the composite particle, for example, a composite material powder sold by Shinshu Ceramics Co., Ltd. under the trade name of "earthplus" can be used. The earthplus is a powder of a composite material into which titanium oxide, silver, and hydroxyapatite are composited, and contains a composite particle including one or more titanium oxide particles, one or more silver particles, and one or more hydroxyapatite particles. In the composite particle, one or more titanium oxide particles, one or more silver particles, and one or more hydroxyapatite particles are arranged three-dimensionally and randomly, and at least one silver particle is fixedly attached to at least one titanium oxide particle. In the composite particle, a part of at least one titanium oxide particle, a part of at least one silver particle, and a part of at least one hydroxyapatite particle are considered to be exposed at the surface of the composite particle.

The composite particle can be manufactured, for example, by using a wet mill to mix titanium oxide powder, a metal powder, and calcium phosphate powder in a liquid and compositing one or more titanium oxide particles included in the titanium oxide powder, one or more metal particles included in the metal powder, and one or more calcium phosphate particles included in the calcium phosphate powder. The composite particle thus manufactured is used in the present invention without being sintered.

The content (purity) of titanium oxide in the titanium oxide powder is preferably 90% by weight or more, more preferably 95% by weight or more, and still more preferably 98% or more. The upper limit value is, for example, 99%.

The particle size of the titanium oxide particle (primary particle) included in the titanium oxide powder is not particularly limited, and it is, for example, 0.03 to 0.1 µm. Because wet mills can make a particle aggregate into individual dispersed particles, the titanium oxide powder may include an aggregate (secondary particle) of titanium oxide particles. The particle size of an aggregate of titanium oxide particles is, for example, 1 to 2 µm. The particle size of a titanium oxide particle or an aggregate thereof is measured, for example, using a transmission electron microscope (TEM) or a scanning electron microscope (SEM).

The metal content (purity) of the metal powder is preferably 80% by weight or more, more preferably 95% by weight or more, and still more preferably 98% or more. The upper limit value is, for example, 99.9%.

The particle size of the metal particle (primary particle) included in the metal powder is not particularly limited, and it is, for example, 1.1 to 1.9 µm. Because wet mills can make a particle aggregate into individual dispersed particles, the metal powder may include an aggregate (secondary particle) of metal particles. Keeping a metal powder refrigerated until it is used can control the aggregation of metal particles included in the metal powder. The particle size of a metal particle or an aggregate thereof is calculated, for example, based on the specific surface area.

The calcium phosphate content (purity) of the calcium phosphate powder is preferably 90% by weight or more, more preferably 95% by weight or more, and still more preferably 98% or more.

The particle size of the calcium phosphate particle (primary particle) included in the calcium phosphate powder is not particularly limited, and it is, for example, 0.1 to 0.2 µm. Because wet mills can make a particle aggregate into individual dispersed particles, the calcium phosphate powder may include an aggregate (secondary particle) of calcium phosphate particles. The particle size of an aggregate of calcium phosphate particles is, for example, 4 to 5 µm. The particle size of a calcium phosphate particle or an aggregate thereof is measured by, for example, a laser diffraction/scattering method.

Wet mills can composite one or more titanium oxide particles, one or more metal particles, and one or more calcium phosphate particles while dispersing and pulverizing, in a liquid, particles included in titanium oxide powder, a metal powder, and calcium phosphate powder. Examples of wet mills include bead mills and ball mills, and among these, bead mills are preferable. Examples of materials of pulverizing media, such as beads and balls, to be used in mills such as bead mills and ball mills include alumina, zircon, zirconia, steel, and glass, and among these, zirconia is preferable. The size (diameter) of pulverizing media can be appropriately adjusted depending on the particle size of a composite particle to be manufactured, and the like, and is usually 0.05 to 3.0 mm, and preferably 0.1 to 0.5 mm. As pulverizing media, for example, beads or balls having a size of about 0.1 mm and a mass of about 0.004 mg can be used.

The liquid used in mixing is, for example, an aqueous medium such as water. When the liquid used in mixing is water, the total amount of titanium oxide powder, a metal powder, and calcium phosphate powder blended is adjusted so as to be usually 25 to 45 parts by mass, and preferably 30 to 40 parts by mass, relative to 65 parts by mass of water.

When raw materials including titanium oxide powder, a metal powder, calcium phosphate powder, and a liquid are mixed in a wet mill, various conditions, for example, the total amount of raw material powders added, the flow rate of the liquid, the circumferential speed of the blades within the cylinder, the stirring temperature, and the stirring time and the like can be appropriately adjusted depending on the particle size of a composite particle to be manufactured, and the like. The total amount of raw material powders (titanium oxide powder, a metal powder, and calcium phosphate powder) added is, for example, 4 kg or more; the cylinder volume is, for example, 0.5 to 4 L; the flow rate of the liquid is, for example, 0.5 to 3 L/minute; the circumferential speed of the blade is, for example, 300 to 900 m/minute; the liquid temperature is, for example, 20 to 60°C; and the mixing time per 1 kg of raw material powder is, for example, 0.5 to 2 hours. The upper limit value of the total amount of raw material powders added can be appropriately adjusted depending on the cylinder volume and the like. The mixing time can be appropriately adjusted depending on the total amount of raw material powders added, and the like.

In addition to titanium oxide powder, a metal powder, calcium phosphate powder, and a liquid, a dispersant is preferably added to the raw materials. Examples of dispersants include a high molecular weight type dispersant, a low molecular weight type dispersant, and an inorganic type dispersant, and a selection can be appropriately made depending on the kind of the liquid used in wet mixing. When the liquid used in mixing is an aqueous medium such as water, for example, an anionic high molecular weight type dispersant and a nonionic high molecular weight type dispersant and the like can be used as a dispersant; examples of anionic high molecular weight type dispersants include a polycarboxylic acid dispersant and a formalin naphthalenesulfonate condensate type dispersant; and examples of nonionic high molecular weight type dispersants include polyethylene glycol. The amount of a dispersant added may be appropriately adjusted, and is, for example, 0.1 to 3% by mass, and preferably 0.3 to 1% by mass, relative to 35 parts by mass of the total amount of titanium oxide powder, a metal powder, and calcium phosphate powder blended.

A suspension (slurry) of composite particles can be manufactured by using a wet mill to mix titanium oxide powder, a metal powder, and calcium phosphate powder in a liquid and compositing one or more titanium oxide particles included in the titanium oxide powder, one or more metal particles included in the metal powder, and one or more calcium phosphate particles included in the calcium phosphate powder. Then, the solvent in the suspension is removed by evaporation or the like, whereby an assembled product (dry powder) of composite particles can be manufactured. An assembled product (dry powder) of composite particles can also be manufactured from a suspension (slurry) of composite particles by a known granulation method such as spray dry granulation.

The particle size of an assembled product of composite particles, as measured by dynamic light scattering, is, for example, 100 to 600 nm, and preferably 200 to 500 nm. The median diameter (d50) of an assembled product of composite particles, as measured by dynamic light scattering on a volumetric basis, is, for example, 250 to 350 nm, and preferably about 300 nm. A particle size by dynamic light scattering is measured using a commercially available dynamic light scattering type particle size distribution measuring device, and preferably a dynamic light scattering type nano tracking particle size distribution measuring device, "UPA-EX150" (manufactured by Nikkiso Co., Ltd.).

The manufactured composite particles can be used in the present invention as they are, and the particle size may be adjusted before being used in the present invention. The adjustment of the particle size can be carried out, for example, by sieving composite particles in the powder state or in the suspension state.

In the assembled product of composite particles, the respective numbers of titanium oxide particles, metal particles, and calcium phosphate particles per composite particle may be identical or different among the composite particles.

In addition to the composite particles including one or more titanium oxide particle, one or more metal particle, and one or more calcium phosphate particle, other particles which may be produced as byproducts in the manufacture of the composite particles may coexist in the assembled product of composite particles. Examples of the other particles include an independent titanium oxide particle, an independent metal particle, an independent calcium phosphate particle, a bonded product of titanium oxide particles (including no metal particle and no calcium phosphate particle), a bonded product of metal particles (including no titanium oxide particle and no calcium phosphate particle), a bonded product of calcium phosphate particles (including no titanium oxide particle and no metal particle), a bonded product of a titanium oxide particle and a metal particle (including no calcium phosphate particle), a bonded product of a titanium oxide particle and a calcium phosphate particle (including no metal particle), and a bonded product of a metal particle and a calcium phosphate particle (including no titanium oxide particle).

### (Method for Contacting Composite Particle with Harmful Insect or Placing Composite Particle in Vicinity of Harmful Insect)

The method for contacting a composite particle with a harmful insect according to the present invention may be any method as long as the method causes the composite particle of the present invention to be present in the habitat of the harmful insect or an egg thereof. Examples of the method for causing the composite particle to be present in the habitat include a method for placing the composite particle as a member in the habitat. There is a method for applying, bonding, attaching, and fixing a composite particle to a member which has been already present in the habitat, to cause the composite particle to be present.

The kind of the member may be any as long as the member can hold the composite particle of the present invention, and examples thereof include a breathable sheet member such as a nonwoven fabric, a building wall, particularly an outer wall, a drainage channel, a rainwater measure, a manhole inner part, a manhole lid, a U-shaped groove, a construction member, a building material, gravel, a filter material, a resin such as foamed polystyrene dropped to a puddle, and paper.

The present invention includes indirect contact via a medium by placing these members in the vicinity of harmful insects or eggs of the harmful insects even in a non-contact state in addition to the direct contact of the members with the harmful insects or the eggs of the harmful insects. As an example, the vicinity means that underwater lives such as wrigglers and water fleas swim to be in the vicinity of the composite particle when a member to which the composite particle of the present invention is attached is installed in water. In this case, the underwater lives are contacted with the member via a water medium. The degree of the vicinity is preferably 5 cm or less, more preferably 3 cm or less, still more preferably 1 cm or less, and most preferably 5 mm or less. That is, a harmful insect control member including the composite particle of the present invention is also preferably used in combination with water or in water.

According to the present invention, it is considered that the harmful insects or the eggs of the harmful insects are contacted with, or placed in the vicinity of the composite particle, whereby the living body is subjected to any damage by the action derived from the particle and the interaction between the particle and the living body to provide the extinction, the control of egg laying, and the control of the hatch of the eggs although the action mechanism is not necessarily apparent.

Examples of a method for applying the composite particle of the present invention to each member include a method for attaching the composite particle to the completed member afterward, and a method for adding the composite particle to raw materials of the member to manufacture the member. Examples of the attaching method include a method for mixing the composite particle with a binder resin or the like to attach the composite particle to the member. Examples of a method for attaching the composite particle to a concrete include a method for coating a binder resin including the composite particle on the concrete.

The material of the member may be any as long as the composite particle can be fixed to the member. Among these, a porous body is desirable. The pore diameter of the porous body is preferably several micrometers to tens of micrometers. It is desirable that the water penetration speed of the porous body is not so high.

Examples of the material of the member include a concrete, an asphalt, a ceramic, a sponge, a nonwoven fabric, a resin such as foam polystyrene, and paper.

Hereinafter, an example in which the composite particles of the present invention is attached to a breathable sheet member via a binder resin will be described as a typical example, but the member can be used for any of those described above.

A breathable sheet member to which the composite particles are attached via a binder resin can be manufactured by supplying a mixed solution containing the composite particles and a binder resin to a breathable sheet member or immersing a breathable sheet member in a mixed solution containing the composite particles and a binder resin, followed by drying the breathable sheet member. A breathable sheet member to which the composite particles are attached via a binder resin can be manufactured by supplying a mixed solution containing the composite particles and a binder resin to the raw fabric of a breathable sheet or immersing the raw fabric of a breathable sheet in a mixed solution containing the composite particles and a binder resin, followed by drying the raw fabric of the breathable sheet and then cutting a breathable sheet member out of the raw fabric of the breathable sheet.

The amount of the binder resin contained in the mixed solution is preferably 20 to 90 parts by mass, more preferably 30 to 85 parts by mass, and still more preferably 40 to 80 parts by mass, relative to 100 parts by mass of the composite particles. The amount of the binder resin contained in the breathable sheet member is similar.

The total amount of the composite particles and binder resin attached per unit area of the breathable sheet member is not particularly limited, and the lower limit value of the total amount attached is usually 2 g/m², preferably 3 g/m², more preferably 4 g/m², still more preferably 5 g/m², and still more preferably 6 g/m², and the upper limit value of the total amount attached is usually 30 g/m², preferably 25 g/m², more preferably 20 g/m², and still more preferably 15 g/m².

Preferred examples of the amount attached include the same amount attached when the mixed solution is applied to other members such as a concrete.

For the binder resin, known resins having adhesiveness may be used singly or in combinations of two or more thereof. Examples of the binder resin include: natural thickening agents or natural resins such as gelatin, gum arabic, shellac, dammar, elemi, and sandarac; semisynthetic thickening agents or semisynthetic resins such as methyl cellulose, ethyl cellulose, nitro cellulose, carboxymethyl cellulose, and acetate; isophthalic acid-based, terephthalic acid-based, bisphenol-based, and vinyl ester-based polyester resins; acrylic copolymer resins such as ethylene acrylic acid, ethylene acrylic acid ester, acryl ester vinyl, and methacrylic acid ester vinyl; urethane resins formed from the reaction of isocyanate derivative or isocyanurate derivative such as tolylene dicysocyanate, 4,4'-diphenylmethanediisocyanate, or lysine ester triisocyanate, isocyanate derivative or isocyanurate derivative such as tolylene diisocyanate, and polyol such as polyester polyol, polyether polyol, acrylloylol, or phenolic polyol; halogenated polymers such as polyvinyl chloride and polyvinylidene chloride; acetal resins such as polyvinyl acetate, ethylene-vinyl acetate copolymer, vinyl chloride-vinyl acetate copolymer, polyacryl ester, polystyrene, and polyvinyl acetal; polycarbonate resins; cellulose resins such as cellulose acetate; polyolefin resins; synthetic thickening agents or synthetic resins of amino resins and the like such as urea resin, melamine resin, and benzoguanamine resin; silicone resins including a modified product, such as an epoxy-modified, amino-modified, urethane-modified, alkyd-modified, or acryl-modified product, a copolymer, and the like, including silicone resins such as polyalkyl siloxane, polyalkyl hydrogen siloxane, polyalkylalkenyl siloxane, polyalkyl siliconate, polyalkalialkyl siliconate, and polyalkylphenyl siloxane; and fluorine resins such as polymers such as tetrafluoro ethylene or vinylidene fluoride, copolymers of these monomers and another monomer. Among these, urethane resins and silicone resins are preferable, and urethane resins are particularly preferable, from the viewpoint of adhesiveness and the like. The binder resin applied to a concrete is preferably an acrylic copolymerization resin, and Tonan-bond (manufactured by Tonan-bond Co., Ltd.) can be exemplified.

Inorganic binders instead of or in combination of the binder resins may be used singly or in combinations of two or more thereof. Examples of the inorganic binders include products obtained by decomposing hydrolysable silicon compounds such as alkyl silicate, halogenated silicon, and partial hydrolysate thereof; organic polysiloxane compounds and polycondensates thereof; phosphates such as silica, colloidal silica, water glass, silicon compound, and zinc phosphate; metal oxides such as zinc oxide and zirconium oxide; biphosphates; cements; gypsums; limes; and frits for enamel.

A harmful insect control agent which contains the composite particle including a titanium oxide particle, a metal particle, and a calcium phosphate particle of the present invention as an active ingredient may be the composite particle itself, and may contain other known ingredients as long as a harmful insect control operation of the present invention is not impaired. Examples of the other known ingredients include other insecticidal components. Of course, the harmful insect control method can be used in combination with other known harmful insect combating method and harmful insect control method. For example, the harmful insect control agent of the present invention can also be applied to other mosquito capturing tools. Since mosquitoes prefer water places and carbon dioxide, the harmful insect control agent is also effectively combined with a carbon dioxide generation method and the presence of water as in Test Examples to be described later.

### EXAMPLES

Hereinafter, the present invention will be described in further detail with reference to Manufacturing Examples and Test Examples. However, the scope of the present invention is not limited to these Manufacturing Examples and Test Examples.

### Manufacturing Example 1: Manufacture of Composite Particles

In the present Manufacturing Example, titanium oxide powder, silver powder, and hydroxyapatite power were used as raw material powders. And composite particles including one or more titanium oxide particles, one or more silver particles, and one or more hydroxyapatite particles were manufactured.

In the present Manufacturing Example, two composite particles M1 and M2 were manufactured. The composite particles M1 and M2 were different in the content ratio of titanium oxide, silver, and hydroxyapatite. The composite particles M1 and M2 were manufactured in the same manner as "earthplus" (TM) manufactured and sold by Shinshu Ceramics Co., Ltd. (Nagano, Japan). The manufacture of the composite particles M1 and M2 was consigned to Shinshu Ceramics Co., Ltd.

The raw material powders shown in Table 1 were prepared. The particle size of the titanium oxide powder is a value measured using a transmission electron microscope (TEM) or a scanning electron microscope (SEM). The particle size of the silver powder is a value calculated based on the specific surface area. The particle size of the hydroxyapatite powder is a value measured by a laser diffraction/scattering method. The silver particles contained in the silver powder were inhibited from aggregating because the silver powder was kept refrigerated until it was used.

**[Table 1]**

| Raw material powder | | | |
|---|---|---|---|
| | Anatase type titanium oxide powder | Hydroxyapatite powder | Silver powder |
| CAS No. | 13463 - 67 - 7 | 10103 - 46 - 5 | 7440 - 22 - 4 |
| Purity | 95% by weight or more | 95% by weight or more | 95% by weight or more |
| Shape | Powder | Powder | Powder |
| Color | White | White | - |
| Smell | None | None | None |
| Specific gravity | 3.9 | 2.7 | 10.5 |
| Particle size of primary particle | 0.03 - 0.1 µm | 0.1 - 0.2 µm | 1.1 - 1.9 µm |
| Particle size of secondary particle | 1 - 2 µm | 4 - 5 µm | - |
| pH | 6-8 | - | - |
| Melting point | 1823°C or higher | 1670°C or higher | 962°C or higher |

A commercially available wet bead mill ("STARMILL LME" manufactured by Ashizawa Finetech Ltd.) was used to mix titanium oxide powder, silver powder, hydroxyapatite powder, and a polycarboxylic acid dispersant in water, thereby compositing one or more titanium oxide particles included in the titanium oxide powder, one or more silver particles included in the silver powder, and one or more hydroxyapatite particles included in the hydroxyapatite powder, to manufacture a suspension (slurry) of composite particles. The wet bead mill used can pulverize titanium oxide particles, silver particles, and hydroxyapatite particles included in the raw material powder while dispersing them, whereby they can be made into fine particles as small as nanoparticles or submicron particles, and the fine particles can be composited.

The conditions for compositing particles using the wet bead mill were as follows:
the total amount of raw material powder added: 4 kg or more
cylinder volume: 3.3 L
beads: beads made of zirconia (0.5 mm in diameter, 0.37 mg in mass)
flow rate of liquid: 2 L/minute
circumferential speed of blades in cylinder: 540 m/minute
liquid temperature: 35 to 45°C
mixing time per kg of raw material powder: 30 to 40 minutes (about 36 minutes)

The total amount of titanium oxide powder, silver powder, and hydroxyapatite powder blended was adjusted to 35 parts by mass relative to 65 parts by mass of water. The amount of polycarboxylic acid dispersant blended was adjusted to 0.5 parts by mass relative to 35 parts by mass of the total amount of titanium oxide powder, silver powder, and hydroxyapatite powder blended.

In the manufacture of the composite particles M1,
the amount of titanium oxide powder blended was adjusted to about 160 parts by mass (155 to 165 parts by mass) relative to 1 part by mass of silver powder; and
the amount of hydroxyapatite powder blended was adjusted to about 40 parts by mass (39 to 41 parts by mass) relative to 1 part by mass of silver powder.

In the manufacture of the composite particles M2, the amount of titanium oxide powder blended was adjusted to about 30 parts by mass (29 to 31 parts by mass) relative to 1 part by mass of silver powder, and the amount of hydroxyapatite powder blended was adjusted to about 3 parts by mass (2.5 to 3.5 parts by mass) relative to 1 part by mass of silver powder.

The composite particles M1 and M2 were manufactured by drying a suspension (slurry) of composite particles. The particle size of composite particles M1 and M2, as measured by dynamic light scattering, was 200 to 500 nm. The median diameter (d50) of the composite particles M1 and M2, as measured by dynamic light scattering on a volumetric basis, was about 300 nm. The particle size by dynamic light scattering was measured using a commercially available dynamic light scattering type particle size distribution measuring device, specifically a dynamic light scattering type nano tracking particle size distribution measuring device, "UPA-EX150" (manufactured by Nikkiso Co., Ltd.),

### [Test Example 1] Hatch Control Test of Eggs of Mosquitoes by Composite Particle of Present Invention

In the present Test, mosquitoes were caused to lay eggs on a filter paper treated by the composite particle of the present invention; and the number of the eggs hatched was compared with that of an untreated control group to investigate the influence of the composite particle of the present invention on the hatch of the eggs of the mosquitoes.

### 1. Test Method

### 1-1. Material

### (1) Egg Laying Vessel

### (i) Test Group

50 mL of Milli-Q water and 20 µL of the M1 particle solution were added into a 250-mL plastic vessel (12 cm in diameter, 7 cm in height) (the last concentration of the M1 particle: 0.014%). Next, an egg laying filter paper (4 cm in height, 9 cm in length) was stuck on an inner wall surface of the plastic vessel, which was taken as a test group (FIG. 1A, FIG.1C). 1 cm of the height of the egg laying filter paper is below a water surface, and 3 cm of the height of the filter paper is in a wet state in the air. The eggs were laid on a wetter filter paper portion on the boundary (that is, water's edge) between a water layer and an air layer.

### (ii) Control Group

The same as the test group was taken as the control group except that 50 mL of MiliQ water including no composite particle of the present invention was added into a 250-mL plastic vessel (FIG. 1B).

### (2) Mosquitoes

150 Aedes albopictus adults collected in a house in Hatsudai, Shinjuku-ku, Tokyo and passaged in the laboratory and 150 Aedes aegypti adults imparted by the University of Notre Dame in the U.S. were used. Examples of the Aedes albopictus-borne infection include Zika virus infection, dengue fever, Chikungunya fever, West Nile fever, and Japanese encephalitis and the like. The vector mosquitoes of the West Nile fever are Culex pipiens (Cx. p. molestus, Cx. p. pallense) having blood-sucking palatability from birds, but the Aedes albopictus is also known to participate in the infection as a bridge vector mosquito. The main vector mosquito of the Japanese encephalitis is Culex tritaeniorhyncus, but the Aedes albopictus is also known to be experimentally infected. Examples of the Aedes aegypti-borne infection include Zika virus infection, dengue fever, Chikungunya fever, and yellow fever.

### 1-2. Test Procedure

### (1) Blood-Sucking of Mosquitoes

Aedes aegypti and Aedes albopictus were placed into different cloth adult cages (20 × 20 × 30 cm), respectively, and heparin-containing horse whole blood was sucked via an artificial membrane with an artificial membrane feeding system manufactured by Hemotek Ltd. The adult gauges were installed in a humidifier at 37°C.

### (2) Egg Laying of Mosquitoes

The egg laying vessels of the test group and control group were installed in the adult cage immediately after blood-sucking. Then, the adults were waited to lay eggs on a wet filter paper in a constant temperature bath at 24°C (lighting time per day: 16 hours, dark time: 8 hours) .

### (3) Treatment of Laid Eggs

Since the eggs were confirmed on the wet egg laying filter paper in each of the egg laying vessels of the test group and control group after six days from blood-sucking, the vessel was removed from the adult cage, covered, and allowed to stand at 24°C for three days.

Then, the filter paper on which the eggs were laid was immersed in water in the same egg laying vessel. As a diet for larvae, a CE-2 powder feed (manufactured by CLEA Japan, Inc.) was dissolved in an appropriate quantity of water and given.

### (4) Count of Number of Hatched Larvae and Eggs

In order to confirm the hatch of the larvae, the presence or absence of the hatch was observed for about two weeks, and the number of the hatched larvae was counted. The number of the eggs on the egg laying filter paper was counted at the end of the test.

The Fisher's exact test was employed.

### 2. Test Results

Regarding the Aedes albopictus, the number of the eggs laid on the egg laying filter paper treated by the composite particle of the present invention of the test group was 250, and the number of the eggs hatched among these was 45 (hatch rate: 18%). Meanwhile, in the control group, the number of the eggs laid on the untreated egg laying filter paper was 170, and the number of the eggs hatched among these was 148 (hatch rate: 87%). The odds ratio was 0.033 (95% credibility interval: 0.019, 0.057).

Regarding the Aedes aegypti, the number of the eggs laid on the egg laying filter paper treated by the composite particle of the present invention of the test group was 75, and the number of the eggs hatched among these was 12 (hatch rate: 16%). Meanwhile, in the control group, the number of the eggs laid on the untreated egg laying filter paper was 51, and the number of the eggs hatched among these was 32 (hatch rate: 62.7%). The odds ratio was 0.113 (95% credibility interval: 0.049, 0.262).

As described above, it was found that the composite particle of the present invention can significantly control the hatch rate of the mosquitoes regardless of the kinds of the mosquitoes.

**[Table 2]**

| Kinds of mosquitoes | | Number of eggs | Number of eggs hatched | Hatch rate | Significant difference | Odds ratio |
|---|---|---|---|---|---|---|
| Aedes albopictus | Test group | 250 | 45 | 18% | Presence | 0.033 |
| | Control group | 170 | 148 | 87% | | |
| Aedes aegypti | Test group | 75 | 12 | 16% | Presence | 0.113 |
| | Control group | 51 | 32 | 63% | | |

### [Test Example 2] Harmful Insect Control Test by Composite Particle of Present Invention (Indoor)

In the present Test, microorganisms were caused to swim in a cultivation vessel coated with a binder including the composite particle of the present invention to investigate the influence of the composite particle of the present invention on the survival of the microorganisms.

### 1. Test Method

### 1-1. Material

### (1) Cultivation Vessel

A slurry obtained by mixing the composite particle M1 of the present invention, a binder (product name: Tonan-bond), and water at a ratio of 1 : 1 : 1 was uniformly applied to an unglazed cultivation vessel (volume: 30 to 50 ml) by a brush. The cultivation vessel was allowed to stand at normal temperature for 12 hours, and dried to prepare a test cultivation vessel.

A slurry including a binder and water at 1 : 1 was similarly applied to an unglazed cultivation vessel to prepare a control cultivation vessel.

### (2) Microorganisms

Moina macrocopas, ostracods, and mosquito larvae were collected from a pond of a private house in Aso-ku, Kanagawa.

### 1-2. Test Method

### (1) Control Group

Water of the pond was placed into the control cultivation vessel, and four Moina macrocopas and four ostracods were charged into the control cultivation vessel.

### (2) Test Group 1

Water of the pond was placed into the test cultivation vessel, and 15 Moina macrocopas and three ostracods were charged into the test cultivation vessel.

### (3) Test Group 2

Water of the pond was placed into the test cultivation vessel, and 30 Moina macrocopas, eight ostracods, and eight mosquito larvae were charged into the test cultivation vessel.

All the tests were performed at room temperature (about 26°C).

### 2. Test Results

### (1) Control Group

Even after ten days had elapsed from the start of the test, all the water fleas vigorously swam.

### (2) Test Group 1

After three hours from the start of the test, all the Moina macrocopas died, and after one day, all the ostracods died.

### (3) Test Group 2

After four hours from the start of the test, all the Moina macrocopas died; after one day, all the ostracods died; and after 15 days, six mosquito larvae died, and after 28 days, all the mosquito larvae died.

As described above, the composite particle of the present invention was found to have an insecticidal effect on the water fleas and the mosquito larvae.

### [Test Example 3] Harmful Insect Control Test by Composite Particle of Present Invention (Outdoor)

In the present test, at the following test place, water was placed into a vessel coated with a binder including the composite particle of the present invention, and the effect of controlling mosquito larvae and mosquitoes by the composite particle of the present invention was investigated over a long time period.

### 1. Test Method

### 1-1. Material

### (1) Vessel

### (a) Concrete Vessel of Test Group 1

About 25 ml of 90 ml of a mixed solution of 30 ml of a composite particle solution (i) of the present invention, 30 ml of a binder solution (ii), and 30 ml of water which will be described later was coated (applied) to a height of about 15 cm on the whole of an inner surface of a cylindrical concrete vessel including an opened upper part (45 cm in inner diameter, 19 cm in height, 30 L in volume capacity) by a brush, and allowed to stand at normal temperature for three days for drying, to prepare a test vessel.
(i) The composite particle solution is an aqueous solution including 35% by weight of a composite particle M1 of the present invention.
(ii) The binder solution is obtained by dissolving Tonan-bond (product name) (manufactured by Tonan-bond Co., Ltd.) in a tiny amount of water.

### (b) Concrete Vessel of Test Group 2

The concrete vessel of the test group 2 was prepared in the same manner as in the concrete vessel of the test group 1 except that 180 ml of a mixed solution of 30 ml of the composite particle solution (i), 30 ml of the binder solution (ii), and 120 ml of water was used as the mixed solution applied to the concrete vessel.

### (c) Concrete Vessel of Control Group

The concrete vessel of the control group was prepared in the same manner as in the concrete vessel of the test group 1 except that 60 ml of a mixed solution of 30 ml of the binder solution (ii) and 30 ml of water was used.

### 1-2. Test Method

24 L of Tap water was placed into each of one concrete vessel of the control group, three concrete vessels of the test group 1, and six concrete vessels of the test group 2. These vessels were allowed to stand for about one year under a vinyl sheet tent, and the number of the mosquito larvae per month from the fourth month was counted. The water in each of the vessels was replaced after counting on the seventh month. The tent had only a roof, and was in a state where a side surface was exposed to the open air. Lower surfaces of the vessels were placed on wooden floor grates having a height of about 5 cm so that the vessels were not directly contacted with the ground.

### 1-3. Test Place

Tokawa, Hadano-shi, Kanagawa

### 1-4. Test Period

For one year after December 5, 2017. A temperature during the test period was 3°C to 35°C.

### 2. Test Results

The results are shown in Table 3. In the test group 1 and test group 2 to which the binder including the composite particle of the present invention was applied, the mosquito larvae hardly occurred over one year. Meanwhile, in the control group to which the composite particle of the present invention was not applied, 80 mosquito larvae occurred.

As described above, the composite particle of the present invention was found to have the effect of controlling the egg laying of the mosquitoes to significantly control the mosquito larvae.

**[Table 3]**

| | Control group (one vessel) | Test group 1 | | Test group 2 | |
|---|---|---|---|---|---|
| | | Total number for three vessels (mosquito larvae) | Average value per vessel (mosquito larvae) | Total number for six vessels (mosquito larvae) | Average value per vessel (mosquito larvae) |
| April 12, 2018 (about four months from start of test) | 20 | 0 | 0 | 0 | 0 |
| May 17 | 30 | 4 | 1 | 2 | 1 |
| June 19 | 6 | 2 | 1 | 1 | 1 |
| July 19 | 0 | 2 | 1 | 0 | 0 |
| August 7 | 0 | 0 | 0 | 0 | 0 |
| September 3 | 5 | 2 | 1 | 0 | 0 |
| September 26 | 15 | 0 | 0 | 0 | 0 |
| October 23 | 80 | 14 | 5 | 0 | 0 |

| | | | | | |
|---|---|---|---|---|---|
| *The average value per vessel is represented by an integer obtained by rounding up a value obtained by dividing the total number of the mosquito larvae in all the vessels by the number of the vessels. | | | | | |

### [Test Example 4] Manufacture of Harmful Insect Control Member

The effects were confirmed in the filter paper impregnated with the composite particle solution of the present invention in the above Test Example 1, and the vessel coated with the binder including the composite particle in each of Test Example 2 and Test Example 3. In addition, the same effect can be expected also in a nonwoven fabric and foam polystyrene to which HAIDOROGINCHITAN (Hyd[AgTiO₂]) is fixed.

### 1. Manufacture of Composite-Particles-Attached Nonwoven Fabric

To the suspension (slurry) of the composite particles M1 obtained in Manufacturing Example 1, a binder resin was added to prepare a mixed solution, whereafter a spunpond nonwoven fabric made of polyester was immersed in the mixed solution, thereby impregnating the nonwoven fabric with the mixed solution. After the immersing, the nonwoven fabric was removed from the mixed solution and pressed with a roller to squeeze out the surplus mixed solution. After the pressing, the nonwoven fabric was dried at about 130°C for about one minute to manufacture a composite-particles-attached nonwoven fabric N1. As a binder resin, a urethane resin (C₃H₇NO₂/NH₂COOC₂H₅) was used.

By adjusting the concentrations of the composite particles M1 and the binder resin in the mixed solution, the total amount of composite particles M1 and binder resin attached (fixed) per unit area of the composite-particles-attached nonwoven fabric N1 was adjusted to 4 g/m², 6 g/m², 8 g/m², or 10 g/m².

The breakdown of 4 g/m² was 2.27 g/m² of titanium oxide, 0.571 g/m² of hydroxyapatite, 0.014 g/m² of silver, and 1.14 g/m² of binder resin.

The breakdown of 6 g/m² was 3.41 g/m² of titanium oxide, 0.857 g/m² of hydroxyapatite, 0.021 g/m² of silver, and 1.71 g/m² of binder resin.

The breakdown of 8 g/m² was 4.54 g/m² of titanium oxide, 1.143 g/m² of hydroxyapatite, 0.029 g/m² of silver, and 2.29 g/m² of binder resin.

The breakdown of 10 g/m² was 5.68 g/m² of titanium oxide, 1.428 g/m² of hydroxyapatite, 0.036 g/m² of silver, and 2.86 g/m² of binder resin.

A composite-particles-attached nonwoven fabric N2 was manufactured in the same manner as described above, except that a suspension of composite particles M2 was used in place of the suspension of the composite particles M1.

By adjusting the concentrations of the composite particles M2 and the binder resin in the mixed solution, the total amount of composite particles M2 and binder resin attached (fixed) per unit area of the composite-particles-attached nonwoven fabric N2 was adjusted to 13.5 g/m².

The breakdown of 13.5 g/m² was 6.525 g/m² of titanium oxide, 0.750 g/m² of hydroxyapatite, 0.225 g/m² of silver, and 6.00 g/m² of binder resin.

### 2. Manufacture of Composite-Particles-Attached Foam Polystyrene Sheet or Foam Polystyrene Beads

The composite particles M1 or M2 of the present invention were mixed with raw materials of foam polystyrene to manufacture composite-particles-attached foam polystyrene and foam polystyrene beads.

### 3. Utilizing Method

### (1) Inner Wall Surface of Vessel is Covered with Nonwoven Fabric

The nonwoven fabric N1 or N2 of the above item 1.
was stuck on an inner wall surface of a vessel into which water was placed, and installed so that the lower part thereof was immersed in water. Many of mosquitoes laid eggs on the wall close to the surface of the water, so that the mosquitoes laid eggs on the nonwoven fabric which was stuck on the inner wall and was close to the surface of the water. Therefore, the eggs were contacted with the composite particles in the nonwoven fabric to control the hatch of the eggs.

### (2) Nonwoven Fabric is Randomly Inserted into Water

The nonwoven fabric N1 or N2 of the above item 1. was randomly immersed in a rounded state in water placed into a vessel. Thereby, mosquitoes laid eggs on the nonwoven fabric as a wall surface close to the surface of the water. Therefore, the eggs were contacted with the composite particles in the nonwoven fabric to control the hatch of the eggs.

### (3) Foam Polystyrene Sheet or Foam Polystyrene Beads are Floated on Water Surface

The foam polystyrene sheet or foam polystyrene beads of the above item 2. were floated on the surface of water placed into a vessel. Among mosquitoes, anopheles bearing malaria were known to lay eggs so as to be upright on the surface of the water. Therefore, the eggs of the mosquitoes were contacted with the foam polystyrene sheet and foam polystyrene beads floating on the surface of the water, whereby the hatch of the eggs were efficiently controlled.

### Industrial Applicability

The present invention can control harmful insects. In particular, the hatch of eggs of mosquitoes can be controlled. Wrigglers, which are larvae of the mosquitoes, can be killed. Therefore, the spread of a mosquito-borne infection can be effectively prevented.

## Claims

1. A harmful insect control method comprising:
contacting a composite particle including a titanium oxide particle, a metal particle, and a calcium phosphate particle with a harmful insect or an egg thereof; or
placing the composite particle in the vicinity of the harmful insect or the egg.

2. The method according to claim 1, wherein the harmful insect is a harmful insect bearing a zoonosis.

3. The method according to claim 1 or 2, wherein the harmful insect bearing a zoonosis is a mosquito.

4. The method according to any one of claims 1 to 3, wherein the contacting or placing step is performed in water.

5. A harmful insect control member having:
a composite particle comprising a titanium oxide particle, a metal particle, and a calcium phosphate particle on the member surface.

6. The member according to claim 4, wherein the member is any one selected from a nonwoven fabric, a vessel, a manhole, a street inlet, and a concrete product.

7. The member according to claim 5 or 6, wherein the member is used in combination with water or in water.

8. A harmful insect control coating material comprising:
a composite particle comprising a titanium oxide particle, a metal particle, and a calcium phosphate particle.

9. A harmful insect control agent comprising:
a composite particle comprising a titanium oxide particle, a metal particle, and a calcium phosphate particle.
